# EUROPEAN PATENT APPLICATION

(11) **EP 4 837 691 A1**
(43) Date of publication of application: **11.11.2026**
(21) Application number: 25767732.8
(22) Date of filing: 27.02.2025
(51) Int. Cl.: B23K 26/21, B23K 26/32

(54) **LASER WELDED JOINT AND METHOD FOR MANUFACTURING SAME**

(30) Priority: 08.03.2024 JP 2024036136
(71) Applicant: JFE Steel Corporation, Tokyo 100-0011 (JP)
(72) Inventor: SAWANISHI, Chikaumi, Tokyo 100-0011 (JP); MUNEMURA, Naoaki, Tokyo 100-0011 (JP); TANIGUCHI, Koichi, Tokyo 100-0011 (JP); TAKASHIMA, Katsutoshi, Tokyo 100-0011 (JP); KANAZAWA, Tomomi, Tokyo 100-0011 (JP)
(74) Representative: Hoffmann Eitle
(86) International application number: PCT/JP2025/007027
(87) International publication number: WO 2025/187541

(57) **Abstract**

Provided is a laser welded joint having excellent press formability of the welded portion, even when using a steel sheet having a tensile strength of 980 MPa or more. In a laser welded joint including a first steel sheet, a second steel sheet, and a butt weld between the first steel sheet and the second steel sheet, either or both of the first steel sheet and the second steel sheet is a high strength steel sheet having a tensile strength of 980 MPa or more, and Expression (1), Hₛ₋ₘₐₓ - Hₛ₋ₘᵢₙ ≤ 200 (1), is satisfied in a heat-affected zone of the high strength steel sheet.

## Description

### TECHNICAL FIELD

The present disclosure relates to a laser welded joint and a method of producing the same. In particular, the present disclosure relates to a laser welded joint for use in a tailor welded blank (hereinafter also referred to as a laser welded joint for a tailor welded blank) and a method of producing the same.

### BACKGROUND

A tailor welded blank (TWB) is produced by welding a plurality of steel sheets of different thicknesses and material properties together by laser welding or the like before press forming, resulting in a single blank. For example, in the automotive field, the application of tailor welded blanks enables the optimal arrangement of the steel sheets used as materials. This can both reduce the weight of automotive bodies and ensure the crashworthiness of automobiles. Specifically, tailor welded blanks are applied to automotive parts such as door inners, side panel inners, and side members.

As a technique related to tailor welded blanks, for example, Patent Literature (PTL) 1 discloses, "a laser butt welded steel sheet of thin steel sheets, characterized in that the width of the heat-affected softened zone near the welded portion of the welded steel sheet is 25 % or less of the sheet thickness, and at least one of the base metals has a tensile strength of 780 MPa or more".

Additionally, PTL 2 discloses, "a method of strengthening a butt welded workpiece, characterized in that the heat-affected softened zone near the welded portion of the workpiece created by butt welding sheet materials to each other is strengthened by plastic deformation".

### CITATION LIST

### Patent Literature

PTL 1: JP 2006-218500 A
PTL 2: JP 2010-082685 A

### SUMMARY

### (Technical Problem)

One of the required characteristics of the laser welded joint for a tailor welded blank is the crack resistance of the welded portion and the heat-affected zone (HAZ) during press forming (hereinafter also referred to as the press formability of the welded portion). For example, if excessive strain concentrates in the welded portion or the heat-affected zone during the press forming of the tailor welded blank, cracks may occur with the strain concentration area as an initiation point.

In recent years, there has been a further increase in the strength of automotive steel sheets, and the press formability of the welded portion is required to be excellent even when high strength steel sheets are used for tailor welded blanks.

However, the techniques disclosed in PTL 1 and 2 do not necessarily provide excellent press formability of the welded portion when high strength steel sheets are used for tailor welded blanks, and there is a current desire for improvement.

The present disclosure has been developed in view of the above situation, and it is an object thereof to provide a laser welded joint that exhibits excellent press formability of the welded portion even when using high strength steel sheets, particularly steel sheets having a tensile strength of 980 MPa or more. In addition, an object of the present disclosure is to provide a method of producing the aforementioned laser welded joint. Hereinafter, any numerical range expressed using "to" means a range that includes the numerical values before and after "to" as the lower limit value and the upper limit value, respectively.

### (Solution to Problem)

We conducted intensive studies to achieve the above objects and made the following discoveries.
(1) To improve the press formability of the welded portion, it is important to suppress the concentration of strain in the softened zone (hereinafter also referred to as the HAZ softened zone) within the heat-affected zone (hereinafter also referred to as the HAZ) so as to prevent fracture due to cracks having the HAZ softened zone as an initiation point.
(2) In particular, during the press forming of a tailor welded blank, the tailor welded blank undergoes bending deformation, making it easy for strain to concentrate in the surface layer of the HAZ softened zone. Here, the surface layer refers to the surface layer on the laser incident side, more specifically, a region extending from the surface on the laser incident side to a depth of 300 µm. When using high strength steel sheets, particularly steel sheets with a tensile strength of 980 MPa or more, in a tailor welded blank, the concentration of strain in the surface layer of the HAZ softened zone becomes significant.
(3) To suppress such concentration of strain in the HAZ softened zone, it is effective to minimize the hardness difference in the HAZ. More specifically, by ensuring that the difference between the maximum Vickers hardness and the minimum Vickers hardness in the surface layer of the HAZ of the high strength steel sheet is 200 or less, it becomes possible to achieve excellent press formability of the welded portion even when using steel sheets with a tensile strength of 980 MPa or more.
(4) Furthermore, to make the difference between the maximum Vickers hardness and the minimum Vickers hardness in the surface layer of the HAZ of the high strength steel sheet 200 or less, it is important to appropriately control the laser welding conditions, particularly the laser output, the welding speed, and the relationship with the average Vickers hardness at the surface layer and at the thickness center position of the high strength steel sheet that is a material to be joined.

The present disclosure is based on these discoveries and further studies.

The primary features of the present disclosure are as follows.
1. A laser welded joint including a first steel sheet, a second steel sheet, and a butt weld between the first steel sheet and the second steel sheet, wherein
   either or both of the first steel sheet and the second steel sheet is a high strength steel sheet having a tensile strength of 980 MPa or more, and
   Expression (1) is satisfied in a heat-affected zone of the high strength steel sheet, ${H}_{s - max} - {H}_{s - min} \leq 200$ (1)
   where Hₛ₋ₘₐₓ is a maximum Vickers hardness at a surface layer on a laser incident side of the heat-affected zone of the high strength steel sheet, and
   Hₛ₋ₘᵢₙ is a minimum Vickers hardness at the surface layer on the laser incident side of the heat-affected zone of the high strength steel sheet.
2. The laser welded joint according to 1, wherein Expression (2) is satisfied in a base metal portion of the high strength steel sheet, $0.20 \leq {H}_{bs} / {H}_{bm} \leq 0.90$ (2)
   where H_{bm} is an average Vickers hardness at a thickness center position of the base metal portion of the high strength steel sheet, and
   H_{bs} is an average Vickers hardness at a surface layer on the laser incident side of the base metal portion of the high strength steel sheet.
3. The laser welded joint according to 1 or 2, wherein Expression (3) is satisfied in the heat-affected zone of the high strength steel sheet, $50 \leq {H}_{m - min} - {H}_{s - min} \leq 300$ (3)
   where Hₘ₋ₘᵢₙ is a minimum Vickers hardness at a thickness center position of the heat-affected zone of the high strength steel sheet, and
   Hₛ₋ₘᵢₙ is the minimum Vickers hardness at the surface layer on the laser incident side of the heat-affected zone of the high strength steel sheet.
4. A method of producing a laser welded joint, including:
   performing laser welding on materials to be joined, formed by butting a first steel sheet and a second steel sheet together, to obtain a laser welded joint, wherein
   either or both of the first steel sheet and the second steel sheet is a high strength steel sheet having a tensile strength of 980 MPa or more, and
   Expression (4) is satisfied in the laser welding, $\left(V/3\right) + 2 \leq P \leq \left[\left(V/3\right)+9\right] \times \left({H}_{bm}/{H}_{bs}\right)$ (4)
   where P is a laser output in kW,
   V is a welding speed in m/min,
   H_{bm} is an average Vickers hardness at a thickness center position of the high strength steel sheet, and
   H_{bs} is an average Vickers hardness at a surface layer on a laser incident side of the high strength steel sheet.
5. The method of producing a laser welded joint according to 4, wherein the high strength steel sheet satisfies Expression (2), and
   Expression (5) is satisfied in the laser welding, $0.20 \leq {H}_{bs} / {H}_{bm} \leq 0.90$ (2) $\left(V/3\right) + \left(D/10\right) + 2 \leq P \leq \left[\left(V/3\right)+8\right] \times \left({H}_{bm}/{H}_{bs}\right) + \left(D/10\right)$ (3)
   where P is the laser output in kW,
   V is the welding speed in m/min,
   D is a defocus amount, in mm, of a focal position relative to a surface of the materials to be joined during laser irradiation,
   H_{bm} is the average Vickers hardness at the thickness center position of the high strength steel sheet, and
   H_{bs} is the average Vickers hardness at the surface layer on the laser incident side of the high strength steel sheet.

### (Advantageous Effect)

According to the present disclosure, even when using a steel sheet with a tensile strength of 980 MPa or more, it is possible to obtain a laser welded joint with excellent press formability of the welded portion, and preferably, a laser welded joint with an excellent static tensile property in addition to the press formability of the welded portion. By applying the laser welded joint of the present disclosure to automotive parts, for example, tailored blanks for automotive body frame parts, it becomes possible to reduce the weight of the automotive body (and thus, reduce CO₂ emissions during vehicle operation) while further enhancing the safety performance of the automobile. Furthermore, the laser welded joint of the present disclosure has a high degree of shape freedom and can be produced with stable quality under high production efficiency and thus is extremely advantageous in terms of manufacturability.

### BRIEF DESCRIPTION OF THE DRAWINGS

In the accompanying drawings:
FIG. 1 is a schematic diagram illustrating an example of a cross-section of a laser welded joint;
FIG. 2 is a schematic diagram illustrating an example of a defocus amount;
FIG. 3 is a schematic diagram illustrating an example of the defocus amount;
FIG. 4 is a schematic diagram illustrating an example of the form of a crack in an Erichsen test;
FIG. 5 is a schematic diagram illustrating an example of the form of a crack in an Erichsen test; and
FIG. 6 is a schematic diagram illustrating an example of the form of a crack in an Erichsen test.

### DETAILED DESCRIPTION

The present disclosure is described below based on embodiments. First, a laser welded joint according to an embodiment of the present disclosure is described.

### [1] Laser welded joint

A laser welded joint according to an embodiment of the present disclosure is
a laser welded joint including a first steel sheet, a second steel sheet, and a butt weld between the first steel sheet and the second steel sheet, wherein
either or both of the first steel sheet and the second steel sheet is a high strength steel sheet having a tensile strength of 980 MPa or more, and
Expression (1) is satisfied in the heat-affected zone of the high strength steel sheet, ${H}_{s - max} - {H}_{s - min} \leq 200$ (1)
where Hₛ₋ₘₐₓ is the maximum Vickers hardness at the surface layer of the heat-affected zone of the high strength steel sheet, and
Hₛ₋ₘᵢₙ is the minimum Vickers hardness at the surface layer of the heat-affected zone of the high strength steel sheet.

### [1-1] First steel sheet and second steel sheet

In the laser welded joint according to an embodiment of the present disclosure, a high strength steel sheet having a tensile strength of 980 MPa or more is used in either or both of a first steel sheet and a second steel sheet forming the laser welded joint.

### Tensile strength: 980 MPa or more

When the steel sheets forming a laser welded joint are strengthened, particularly when the tensile strength reaches 980 MPa or more, the Vickers hardness increases throughout the laser welded joint including the butt weld, formed by the weld metal, and the heat-affected zone. As a result, strain concentration in the surface layer of the HAZ softening zone and a consequent decrease in press formability of the welded portion become significant. In other words, in laser welded joints using steel sheets with a tensile strength of 980 MPa or more, improvement in the press formability of the welded portion is particularly required. Therefore, the tensile strength of the high strength steel sheet is set to 980 MPa or more. The tensile strength is preferably 1180 MPa or more. There is no particular upper limit on the tensile strength of high strength steel sheets. For example, the tensile strength of the high strength steel sheet is preferably 2500 MPa or less.

The chemical composition of the high strength steel sheet is not particularly limited. For example, the chemical composition of the high strength steel sheet may contain,
by mass%,
C: 0.04 % to 0.40 %,
Si: 0.01 % to 2.50 %,
Mn: 1.00 % to 5.00 %,
P: 0.050 % or less,
S: 0.010 % or less,
Ti: 0 % to 0.20 %,
Al: 0.01 % to 0.30 %, and
B: 0 % to 0.0100 %,
and contain 10 % or less in total of one or more optionally added elements selected from Cr, Ni, Mo, W, V, Nb, Cu, N, and O, with the balance being Fe and inevitable impurities. (When the optionally added elements are contained, the total thereof is more preferably 0.1 % or more.)

The aforementioned high strength steel sheet may be used for either the first steel sheet or the second steel sheet, while using a steel sheet with a tensile strength of less than 980 MPa (hereinafter also referred to as general steel sheet) for the other. Furthermore, the aforementioned high strength steel sheet may be used for both the first steel sheet and the second steel sheet.

In addition, either or both of the first steel sheet and the second steel sheet (in other words, the aforementioned high strength steel sheet and/or the general steel sheet used for the first steel sheet and the second steel sheet) may be a surface-treated steel sheet having a metal coated or plated layer on the surface of the base steel sheet (hereinafter also referred to as a coated or plated steel sheet). The type and composition of the metal coated or plated layer are not particularly limited. Examples of metal coated or plated layers include a Zn coated or plated layer (a coated or plated layer having a Zn content exceeding 50 mass%) and an Al coated or plated layer (a coated or plated layer having an Al content exceeding 50 mass%). When corrosion resistance is required, a Zn coated or plated layer is preferred over an Al coated or plated layer. This is because the sacrificial protection effect of Zn reduces the corrosion rate of the base steel sheet in a Zn coated or plated layer. Examples of Zn coated or plated layers include a hot-dip galvanized layer (GI), a galvannealed layer (GA), an electrogalvanized layer (EG), a Zn-Ni coated or plated layer (for example, a coated or plated layer containing 10 mass% to 25 mass% of Ni in addition to Zn), a Zn-Al coated or plated layer, a Zn-Mg coated or plated layer, and a Zn-Al-Mg coated or plated layer. Furthermore, examples of Al coated or plated layers include an Al-Si coated or plated layer (for example, a coated or plated layer containing 10 mass% to 20 mass% of Si in addition to Al), and the like. The coating weight of the metal coated or plated layer on the coated or plated steel sheet is also not particularly limited. The coating weight of the metal coated or plated layer is, for example, preferably 120 g/m² or less per side from the perspective of weldability. Furthermore, the coating weight of the metal coated or plated layer is, for example, preferably 20 g/m² or more per side from the perspective of ensuring rust resistance.

Furthermore, the thickness of the first steel sheet and the second steel sheet is preferably 0.5 mm or more. The thickness of the first steel sheet and the second steel sheet is preferably 5.0 mm or less. The thickness of the first steel sheet and the second steel sheet is more preferably 0.7 mm or more. The thickness of the first steel sheet and the second steel sheet is more preferably 2.0 mm or less. The thickness of the first steel sheet and the second steel sheet may be the same or different.

The high strength steel sheets used for the first steel sheet and the second steel sheet each have an HAZ adjacent to the butt weld and a base metal portion adjacent to the HAZ. As will be described later, it is important to reduce the difference between the maximum Vickers hardness and the minimum Vickers hardness in the surface layer of the HAZ of the high strength steel sheet. The butt weld, the HAZ, and the base metal portion may be defined by the procedures described below, for example.

### [1-2] Butt weld

The butt weld that forms the laser welded joint according to one embodiment of the present disclosure is the part where the first steel sheet and the second steel sheet are butted against each other and is formed by weld metal. The chemical composition of the weld metal is not particularly limited, and examples include a chemical composition similar to that of the aforementioned high strength steel sheet or a chemical composition that is a mixture of the chemical compositions of the first steel sheet and the second steel sheet.

### [1-3] Vickers hardness

In the laser welded joint according to one embodiment of the present disclosure, it is extremely important that the above Expression (1) be satisfied.${H}_{s - max} - {H}_{s - min} \leq 200$ (1)

As described above, to improve the press formability of the welded portion, it is important to suppress the concentration of strain in the HAZ softened zone so as to prevent fracture due to cracks having the HAZ softened zone as an initiation point. In particular, during the press forming of a tailor welded blank, the tailor welded blank undergoes bending deformation, making it easy for strain to concentrate in the surface layer of the HAZ softened zone. When using high strength steel sheets, particularly steel sheets with a tensile strength of 980 MPa or more, in a tailor welded blank, the concentration of strain in the surface layer of the HAZ softened zone becomes significant. To suppress such concentration of strain in the HAZ softened zone, it is effective to minimize the hardness difference in the HAZ. Here, if Hₛ₋ₘₐₓ - Hₛ₋ₘᵢₙ exceeds 200, strain concentration in the HAZ softened zone is promoted, and particularly when using steel sheets with a tensile strength of 980 MPa or more, sufficient press formability of the welded portion cannot be obtained. Therefore, the above Expression (1) is required to be satisfied. Hₛ₋ₘₐₓ - Hₛ₋ₘᵢₙ is preferably 150 or less. Hₛ₋ₘₐₓ - Hₛ₋ₘᵢₙ is more preferably 120 or less. No particular lower limit is placed on Hₛ₋ₘₐₓ - Hₛ₋ₘᵢₙ, and the value thereof may be 0. However, since it is difficult to completely eliminate the hardness difference in the HAZ when welding high strength steel sheets, Hₛ₋ₘₐₓ - Hₛ₋ₘᵢₙ is preferably 30 or more. In the case of using high strength steel sheets for both the first steel sheet and the second steel sheet, the above Expression (1) is satisfied in the heat-affected zones of each high strength steel sheet.

Here,
Hₛ₋ₘₐₓ is the maximum Vickers hardness at the surface layer of the heat-affected zone of the high strength steel sheet, and
Hₛ₋ₘᵢₙ is the minimum Vickers hardness at the surface layer of the heat-affected zone of the high strength steel sheet.
$0.20 \leq {H}_{bs} / {H}_{bm} \leq 0.90$ (2)

In the laser welded joint according to one embodiment of the present disclosure, the above Expression (2) is also preferably satisfied. Tailored blanks may be required to have not only excellent press formability of the welded portion but also an excellent static tensile property. Here, by controlling the ratio, denoted as H_{bs}/H_{bm}, of the average Vickers hardness in the surface layer of the base metal portion of the high strength steel sheet to the average Vickers hardness at the thickness center position of the base metal portion of the high strength steel sheet to be within the range of 0.20 to 0.90, the static tensile property can be improved in addition to the press formability of the welded portion. Therefore, the above Expression (2) is preferably satisfied. H_{bs}/H_{bm} is preferably 0.30 or more. H_{bs}/H_{bm} is preferably 0.80 or less. In the case of using high strength steel sheets for both the first steel sheet and the second steel sheet, the above Expression (2) is preferably satisfied in the base metal portion of each high strength steel sheet.

Here,
H_{bm} is the average Vickers hardness at the thickness center position of the base metal portion of the high strength steel sheet, and
H_{bs} is the average Vickers hardness in the surface layer of the base metal portion of the high strength steel sheet.

The mechanical properties of the base metal portion of the high strength steel sheet forming the laser welded joint are generally maintained as the mechanical properties of the high strength steel sheet to be joined. Therefore, as described below, the average Vickers hardness at the thickness center position and in the surface layer of the high strength steel sheet to be joined is represented as H_{bm} and H_{bs}, respectively, similar to the average Vickers hardness at the thickness center position and in the surface layer of the base metal portion of the high strength steel sheet forming the laser welded joint.$50 \leq {H}_{m - min} - {H}_{s - min} \leq 300$ (3)

In the laser welded joint according to one embodiment of the present disclosure, the above Expression (3) is also preferably satisfied. As described above, tailored blanks may be required to have not only excellent press formability of the welded portion but also an excellent static tensile property. During the press forming of a tailor welded blank, the tailor welded blank undergoes bending deformation, making it easy for strain to concentrate in the surface layer of the HAZ softened zone. On the other hand, when a static tensile load is applied to the tailored blank, strain is also likely to concentrate in the HAZ softened zone. However, in this case, the strain is dispersed in the thickness direction of the laser welded joint. Therefore, to improve the static tensile property, it is important to increase the minimum Vickers hardness at the thickness center position of the HAZ of the high strength steel sheet, which can be considered as the average hardness in the thickness direction, thereby increasing the difference between the minimum Vickers hardness at the thickness center position and the minimum Vickers hardness in the surface layer of the HAZ, denoted as Hₘ₋ₘᵢₙ - Hₛ₋ₘᵢₙ. Here, if Hₘ₋ₘᵢₙ - Hₛ₋ₘᵢₙ is less than 50, the effect of improving the static tensile property may be small. On the other hand, setting Hₘ₋ₘᵢₙ - Hₛ₋ₘᵢₙ to exceed 300 may give rise to production constraints, such as an excessive increase in the carbon equivalent of the high strength steel sheet. Therefore, the above Expression (3) is preferably satisfied. Hₘ₋ₘᵢₙ - Hₛ₋ₘᵢₙ is preferably 60 or more. Hₘ₋ₘᵢₙ - Hₛ₋ₘᵢₙ is preferably 170 or less. In the case of using high strength steel sheets for both the first steel sheet and the second steel sheet, the above Expression (3) is preferably satisfied in the base metal portion of each high strength steel sheet.

Here,
Hₘ₋ₘᵢₙ is a minimum Vickers hardness at a thickness center position of the heat-affected zone of the high strength steel sheet, and
Hₛ₋ₘᵢₙ is a minimum Vickers hardness at the surface layer of the heat-affected zone of the high strength steel sheet.

Hₛ₋ₘₐₓ, Hₛ₋ₘᵢₙ, and Hₘ₋ₘᵢₙ are measured in accordance with JIS Z 2244-1:2020. Hₛ₋ₘₐₓ, Hₛ₋ₘᵢₙ, and Hₘ₋ₘᵢₙ are measured as follows, for example.

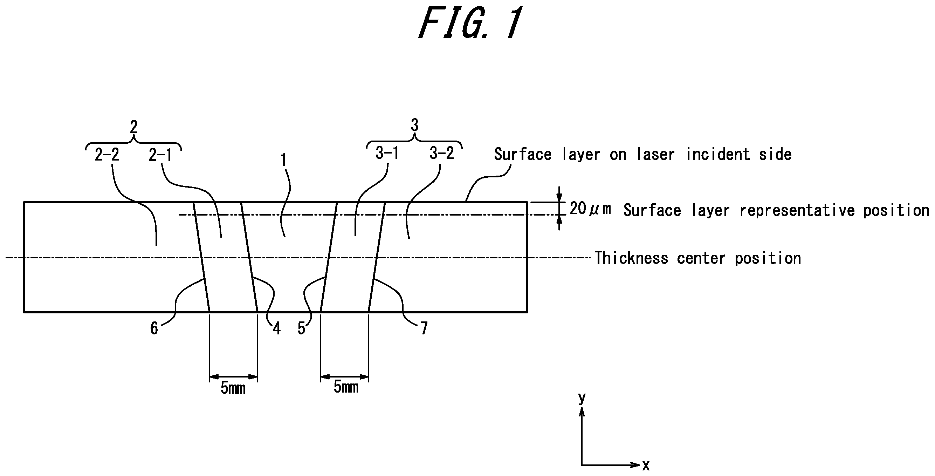

As illustrated in FIG. 1, the laser welded joint is cut so that a thickness direction cross-section perpendicular to the welding line (welding direction) is the cut surface. Next, the cut surface is polished, and in the cut surface, the boundary between the first steel sheet and the butt weld (also referred to as the first bond portion) and the boundary between the second steel sheet and the butt weld (also referred to as the second bond portion) are determined to define the butt weld. A conventional method may be used as the method of determining the first bond portion and the second bond portion. In the first steel sheet, the region from the first bond portion to a position 5 mm away (toward the first steel sheet side in the welding perpendicular direction) (hereinafter also referred to as the HAZ-base metal portion boundary of the first steel sheet) is defined as the HAZ, and the remaining region is defined as the base metal portion. Similarly, in the second steel sheet, the region from the second bond portion to a position 5 mm away (toward the second steel sheet side in the welding perpendicular direction) (hereinafter also referred to as the HAZ-base metal portion boundary of the second steel sheet) is defined as the HAZ, and the remaining region is defined as the base metal portion.

In FIG. 1, reference numeral 1 denotes the butt weld, 2 denotes the first steel sheet, 2-1 denotes the HAZ, 2-2 denotes the base metal portion, 3 denotes the second steel sheet, 3-1 denotes the HAZ, 3-2 denotes the base metal portion, 4 denotes the first bond portion, 5 denotes the second bond portion, 6 denotes the HAZ-base metal portion boundary of the first steel sheet, and 7 denotes the HAZ-base metal portion boundary of the second steel sheet. Furthermore, x is the welding perpendicular direction, and y is the thickness direction. The welding perpendicular direction is a direction that is perpendicular to the welding direction and perpendicular to the thickness direction.

When using a high strength steel sheet for the first steel sheet, a Vickers hardness test in accordance with JIS Z 2244-1:2020 is performed at a surface layer representative position of the HAZ of the high strength steel sheet (at a depth of 20 µm from the surface on the laser incident side of the high strength steel sheet) and at the thickness center position, respectively, at intervals of 200 µm in the welding perpendicular direction (x direction) from the first bond portion to the HAZ-base metal portion boundary of the first steel sheet, and the Vickers hardness is measured. The indentation load is set to 20 g, and the indentation time is set to 15 seconds. Among Vickers hardness values measured at the surface layer of the HAZ of the high strength steel sheet, a maximum value is defined as Hₛ₋ₘₐₓ and a minimum value is defined as Hₛ₋ₘᵢₙ. Among Vickers hardness values measured at the thickness center position of the HAZ of the high strength steel sheet, a minimum value is defined as Hₘ₋ₘᵢₙ. Furthermore, when using a high strength steel sheet for the second steel sheet, a Vickers hardness test is performed in the same manner as above, and Hₛ₋ₘₐₓ, Hₛ₋ₘᵢₙ, and Hₘ₋ₘᵢₙ are measured for the high strength steel sheet used for the second steel sheet.

H_{bm} and H_{bs} are measured in accordance with JIS Z 2244-1:2020. H_{bm} and H_{bs} are measured as follows, for example.

In the same manner as described above, the laser welded joint is cut, and at the cut surface, the HAZ and base metal portion of the first steel sheet, the butt weld, and the HAZ and base metal portion of the second steel sheet are defined, as illustrated in FIG. 1. When using a high strength steel sheet for the first steel sheet, a Vickers hardness test in accordance with JIS Z 2244-1:2020 is performed at three arbitrary points at the surface layer representative position of the base metal portion of the high strength steel sheet (at a depth of 20 µm from the surface on the laser incident side of the high strength steel sheet) and at the thickness center position, and the Vickers hardness is measured. The indentation load is set to 20 g, and the indentation time is set to 15 seconds. The average Vickers hardness at the thickness center position and at the surface layer of the base metal portion of the high strength steel sheet is denoted as H_{bm} and H_{bs}, respectively. Furthermore, when using a high strength steel sheet for the second steel sheet, a Vickers hardness test is performed in the same manner as above, and H_{bm} and H_{bs} are measured for the high strength steel sheet used for the second steel sheet.

For the Vickers hardness at the surface layer (Hₛ₋ₘₐₓ, Hₛ₋ₘᵢₙ, and H_{bs}), a deviation in the measurement position is allowable as long as the measurement position is at a depth of 20 µm ± 10 µm from the surface of the high strength steel sheet. However, if the Vickers hardness varies significantly with depth, the average of the Vickers hardness values at 10 µm, 20 µm, and 30 µm from the surface of the HAZ of the high strength steel sheet is used to determine Hₛ₋ₘₐₓ, Hₛ₋ₘᵢₙ, and H_{bs}. For the Vickers hardness at the thickness center position (Hₘ₋ₘᵢₙ and H_{bm}), a deviation in the measurement position is allowable as long as the measurement position is at a depth of ±100 µm from the thickness center position of the high strength steel sheet. However, if the Vickers hardness varies significantly with depth, the average of the Vickers hardness values at the thickness center position - 100 µm, at the thickness center position, and at the thickness center position + 100 µm is used to determine Hₘ₋ₘᵢₙ and H_{bm}.

No particular limitations are placed on the configuration other than those described above, and configurations similar to conventional laser welded joints can be adopted as appropriate.

### [2] Method of producing a laser welded joint

Next, a method of producing a laser welded joint according to an embodiment of the present disclosure is described.

A method of producing a laser welded joint according to an embodiment of the present disclosure includes
performing laser welding on materials to be joined, formed by butting a first steel sheet and a second steel sheet together, to obtain a laser welded joint, wherein
either or both of the first steel sheet and the second steel sheet is a high strength steel sheet having a tensile strength of 980 MPa or more, and
Expression (4) is satisfied in the laser welding, $\left(V/3\right) + 2 \leq P \leq \left[\left(V/3\right)+9\right] \times \left({H}_{bm}/{H}_{bs}\right)$ (4)
where P is a laser output in kW,
V is a welding speed in m/min,
H_{bm} is an average Vickers hardness at a thickness center position of the high strength steel sheet, and
H_{bs} is the average Vickers hardness in a surface layer of the high strength steel sheet.

The method of producing a laser welded joint according to an embodiment of the present disclosure is described below. The tensile strength, chemical composition, thickness, Vickers hardness, and the like of the first steel sheet and second steel sheet to be joined are the same as those described above, in [1] Laser welded joint, and are therefore omitted here.$\left(V/3\right) + 2 \leq P \leq \left[\left(V/3\right)+9\right] \times \left({H}_{bm}/{H}_{bs}\right)$ (4)

We conducted various studies and discovered that in order to produce a laser welded joint that satisfies the above Expression (1), it is important that, during laser welding, the relationship between the laser output P and the welding speed V, which greatly affect the amount of welding heat input, be appropriately controlled according to H_{bm}/H_{bs}, which is the ratio of the average Vickers hardness at the thickness center position to the average Vickers hardness at the surface layer of the high strength steel sheet to be joined. Here, if P exceeds [(V/3) + 9] × (H_{bm}/H_{bs}), the welding heat input becomes excessive, and hardenability increases in a part of the HAZ (the region near the heat input zone). In other words, in a certain region of the HAZ, the peak temperature during welding exceeds Ac₃, resulting in a very hard martensitic microstructure in that region. As a result, Hₛ₋ₘₐₓ increases. On the other hand, in other regions of the HAZ, there are locations where the peak temperature during welding falls below the Ac₁ point, and in those regions, the tempering of martensite is promoted. As a result, Hₛ₋ₘᵢₙ decreases. That is, it becomes extremely difficult to satisfy the above Expression (1). On the other hand, if P is less than (V/3) + 2, the amount of welding heat input becomes insufficient, making it easier for welding defects such as undercuts to occur in the weld metal. Therefore, the geometric stress concentration during press forming becomes significant, leading to a decrease in press formability. Additionally, the geometric stress concentration when a static tensile load is applied also becomes significant, leading to a decrease in the static tensile property. Therefore, the above Expression (4) is required to be satisfied. P is preferably (V/3) + 3 or more. Furthermore, P is preferably [(V/3) + 7] × (H_{bm}/H_{bs}) or less.

Here,
P is the laser output in kW,
V is the welding speed in m/min,
H_{bm} is the average Vickers hardness at a thickness center position of the high strength steel sheet, and
H_{bs} is the average Vickers hardness in a surface layer of the high strength steel sheet.

We consider that the reason why the upper limit of P in the right-hand side of the above Expression (4) is proportional to H_{bm}/H_{bs} is as follows. Specifically, a value of H_{bm}/H_{bs} exceeding 1 indicates that the hardness at the surface layer of the high strength steel sheet to be joined is lower than the hardness at the thickness center position. As the hardness at the surface layer of the high strength steel sheet to be joined decreases, tempering becomes less likely to occur, for example, due to a decrease in the proportion of martensite in the microstructure or a decrease in the carbon equivalent. As a result, the decrease in Hₛ₋ₘᵢₙ is relatively suppressed. The upper limit of P therefore changes proportionally to H_{bm}/H_{bs}.$\left(V/3\right) + \left(D/10\right) + 2 \leq P \leq \left[\left(V/3\right)+8\right] \times \left({H}_{bm}/{H}_{bs}\right) + \left(D/10\right)$ (5)

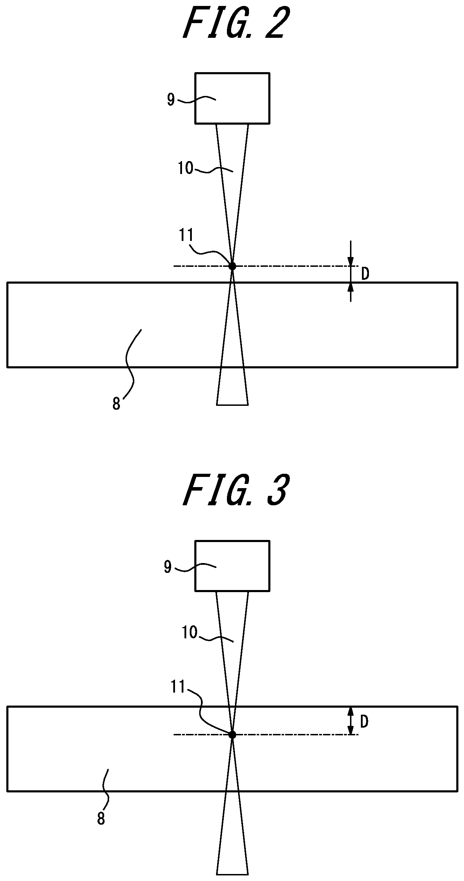

Furthermore, to produce a laser welded joint that satisfies the above Expression (3), it is important to use high strength steel sheets that satisfy the above Expression (2) for the first steel sheet and second steel sheet to be joined, and to perform laser welding under conditions that satisfy the above Expression (5). Here, the defocus amount D of the focal position with respect to the surface of the materials to be joined during laser irradiation (hereinafter also referred to as the defocus amount) is the amount of deviation (absolute value) of the laser focal position in the thickness direction from the surface of the materials to be joined on the side closer to the laser light source, as illustrated in FIGS. 2 and 3. FIG. 2 is a schematic diagram illustrating the defocus amount when the focal position is shifted towards the laser light source side. FIG. 3 is a schematic diagram illustrating the defocus amount when the focal position is shifted towards the opposite side from the laser light source. In FIGS. 2 and 3, reference numeral 8 denotes the materials to be joined, 9 denotes the laser light source, 10 denotes the laser light, and 11 denotes the laser focal position.

Here,
P is the laser output in kW,
V is the welding speed in m/min,
D is the defocus amount, in mm, of the focal position relative to the surface of the materials to be joined during laser irradiation,
H_{bm} is the average Vickers hardness at the thickness center position of the high strength steel sheet, and
H_{bs} is the average Vickers hardness in the surface layer of the high strength steel sheet.

The laser light reaches the maximum energy density at the laser focal position, and the energy density decreases with increased distance from the laser focal position. That is, as the defocus amount increases, the energy density decreases, and as a result, the amount of welding heat input also tends to decrease. Therefore, by optimizing the welding conditions considering the defocus amount, specifically by shifting the range of P towards the high-output side in accordance with the increase in defocus amount, the above effects, particularly the effect of improving the static tensile property, can be achieved more advantageously. It also becomes possible to produce a laser welded joint that satisfies the above Expression (3). P is preferably (V/3) + (D/10) + 2.5 or more. Furthermore, P is preferably [(V/3) + 6] × (H_{bm}/H_{bs}) + (D/10) or less.

Welding conditions other than those described above are not particularly limited, and a conventional method may be used.

For example, V is preferably 1.0 m/min or more. V is preferably 10.0 m/min or less. A value of less than 1.0 m/min for V may lead to an increase in processing time. On the other hand, a value exceeding 10.0 m/min for V may decrease welding stability and cause problems such as an increase in spatter. V is more preferably 2.0 m/min or more. Furthermore, V is more preferably 7.0 m/min or less.

A shielding gas may optionally be used in the laser welding. The type of shielding gas used is not particularly limited, and examples include Ar, He, CO₂, O₂, N₂, and mixed gases thereof.

Furthermore, a filler wire may optionally be used in the laser welding. Examples of filler wire types that can be used include solid wires, flux-cored wires, and metal-cored wires. Among these, a solid wire is preferably used from the perspective of wire cost. An example of the chemical composition of the filler wire contains, by mass%,
C: 0.03 % to 0.2 %,
Si: 0.005 % to 2.00 %,
Mn: 0.05 % to 5.00 %,
P: 0.050 % or less,
S: 0.010 % or less,
Ti: 0 % to 0.20 %,
Al: 0 % to 0.30 %, and
O: 0 % to 0.01 %,
and contains 10 % or less in total of one or more optionally added elements selected from Cr, Ni, Mo, W, V, B, Nb, Cu, and N, with the balance being Fe and inevitable impurities. (When the optionally added elements are contained, the total thereof is more preferably 0.01 % or more.) When a filler wire is used, it is preferable to adjust the wire diameter and feed rate to prevent the thickness of the welded portion from becoming excessively thick.

The distance (gap) between the first steel sheet and the second steel sheet to be joined is preferably 1.0 mm or less. The distance is more preferably 0.5 mm or less. Furthermore, from the perspective of welding stability, the distance is preferably close to 0 mm.

### EXAMPLES

The first steel sheet and the second steel sheet illustrated in Table 1 were butt-joined, and laser welding was performed under the set of conditions illustrated in Table 2 to obtain a laser welded joint. In each instance of the above laser welding, a fiber laser with a maximum output of 13 kW and a beam diameter of 0.5 mm was used. Furthermore, the entire width of the first steel sheet and the second steel sheet was welded. In some cases, welding was performed using filler wire equivalent to YGW11 as specified in JIS Z 3312:2009.

For the obtained laser welded joints, Hₛ₋ₘₐₓ, Hₛ₋ₘᵢₙ, Hₘ₋ₘᵢₙ, H_{bm}, and H_{bs} were measured in the manner described above. The measurement results are listed in Table 3.

Furthermore, the press formability and static tensile property of the welded portion were evaluated for the obtained laser welded joints as described below. The evaluation results are listed in Table 3.

### · Evaluation of press formability of welded portion

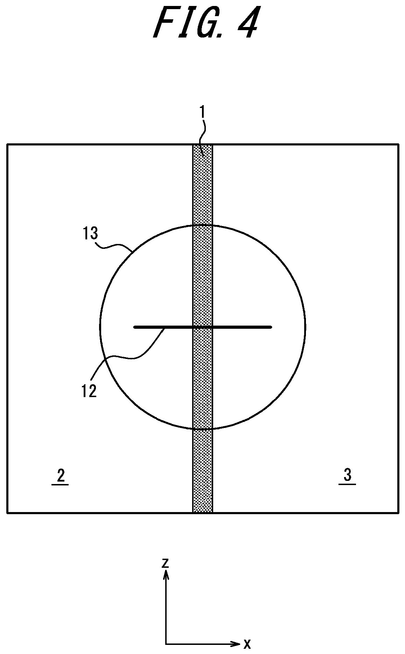

Test pieces with shapes as illustrated in FIGS. 4 to 6 were taken from the welding direction center of the welded portion of the laser welded joint, and an Erichsen test (stretch forming test) was conducted in accordance with JIS Z 2247:2006. The position at which a crack occurred in the test pieces was then confirmed, and the press formability of the welded portion was evaluated based on the following criteria.

A (pass, excellent): a crack occurred in a direction ±10° of the welding perpendicular direction (x direction) as illustrated in FIG. 4.

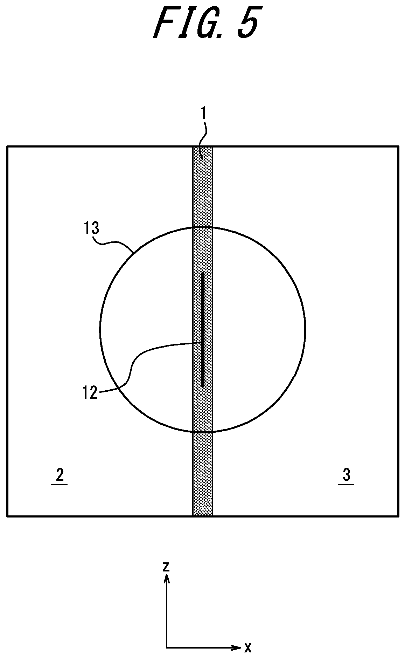

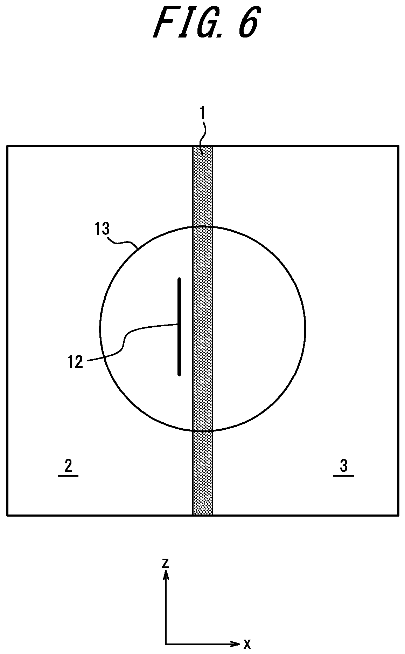

F (fail): a crack occurred in a direction other than ±10° of the welding perpendicular direction (x direction) (in particular, a crack in the welding direction (z direction) at the butt weld and the HAZ as illustrated in FIGS. 5 and 6).

In FIGS. 4 to 6, reference numeral 1 denotes the butt weld, 2 denotes the first steel sheet, 3 denotes the second steel sheet, 12 denotes a crack, and 13 denotes the outer line of the stretch forming portion. Furthermore, x is the welding perpendicular direction, and z is the welding direction.

### · Evaluation of static tensile property

From the laser welded joint, a No. 5 tensile test piece as specified in JIS Z 2241:2011 was taken so that the welding perpendicular direction was the longitudinal direction, and a tensile test was conducted. The test speed was set to 10 mm/s. Subsequently, the fracture position in the test piece was confirmed, the joint efficiency was calculated, and the static tensile property was then evaluated based on the following criteria.
A (pass, particularly excellent): the fracture position is in the base metal portion
B (pass, excellent): the fracture position is in the HAZ or butt weld with a joint efficiency of 90 % or more
F (fail): the fracture position is in the HAZ or butt weld with a joint efficiency of less than 90 %

Here, the joint efficiency was calculated as follows.
· When the fracture position is in the HAZ 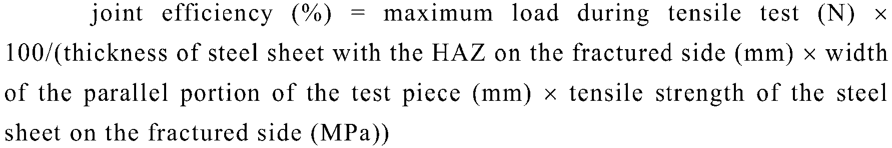 joint efficiency (%) = maximum load during tensile test (N) × 100/(thickness of steel sheet with the HAZ on the fractured side (mm) × width of the parallel portion of the test piece (mm) × tensile strength of the steel sheet on the fractured side (MPa))
· When the fracture position is in the butt weld
   the smaller value of the joint efficiency for the first steel sheet and the joint efficiency for the second steel sheet 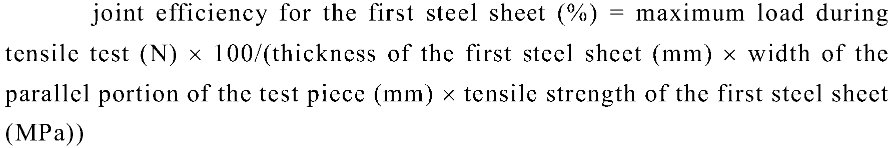 joint efficiency for the first steel sheet (%) = maximum load during tensile test (N) × 100/(thickness of the first steel sheet (mm) × width of the parallel portion of the test piece (mm) × tensile strength of the first steel sheet (MPa)) 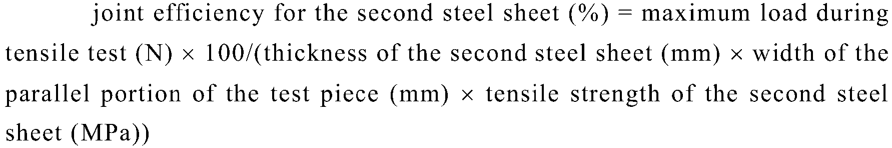 joint efficiency for the second steel sheet (%) = maximum load during tensile test (N) × 100/(thickness of the second steel sheet (mm) × width of the parallel portion of the test piece (mm) × tensile strength of the second steel sheet (MPa))

### [Table 1]

**Table 1**

| No. | First steel sheet | | | | | Second steel sheet | | | | | Remarks |
|---|---|---|---|---|---|---|---|---|---|---|---|
| | Sheet thickness [mm] | Tensile strength [MPa] | H_{bs}/H_{bm} | Expression (2) | Metal coated or plated layer | Sheet thickness [mm] | Tensile strength [MPa] | H_{bs}/H_{bm} | Expression (2) | Metal coated or plated layer | |
| 1 | 1.4 | 985 | 0.70 | satisfied | absent | 1.4 | 985 | 0.70 | satisfied | absent | Example |
| 2 | 1.2 | 1210 | 0.50 | satisfied | GA | 1.6 | 485 | - | - | GA | Example |
| 3 | 1.6 | 1200 | 0.94 | not satisfied | absent | 2.0 | 1005 | 0.92 | not satisfied | GA | Example |
| 4 | 1.4 | 990 | 0.92 | not satisfied | GA | 1.4 | 990 | 0.92 | not satisfied | GA | Example |
| 5 | 1.8 | 1210 | 0.87 | satisfied | GA | 1.8 | 1210 | 0.87 | satisfied | GA | Example |
| 6 | 1.4 | 1180 | 0.85 | satisfied | absent | 1.6 | 990 | 0.80 | satisfied | absent | Comparative Example |
| 7 | 1.6 | 1230 | 1.01 | not satisfied | absent | 1.6 | 1240 | 0.98 | not satisfied | absent | Comparative Example |
| 8 | 1.2 | 1510 | 0.30 | satisfied | GA | 1.6 | 485 | - | - | GA | Example |
| 9 | 1.4 | 1210 | 0.75 | satisfied | GA | 1.6 | 610 | - | - | GA | Example |
| 10 | 1.4 | 1000 | 0.80 | satisfied | GA | 1.0 | 1520 | 0.50 | satisfied | GA | Example |
| 11 | 1.2 | 1220 | 0.80 | satisfied | GA | 1.6 | 485 | - | - | GA | Example |
| 12 | 1.4 | 985 | 0.70 | satisfied | absent | 1.4 | 985 | 0.70 | satisfied | absent | Example |
| 13 | 1.4 | 985 | 0.70 | satisfied | absent | 1.4 | 985 | 0.70 | satisfied | absent | Example |
| 14 | 1.4 | 985 | 0.70 | satisfied | absent | 1.4 | 985 | 0.70 | satisfied | absent | Example |
| 15 | 1.4 | 985 | 0.70 | satisfied | absent | 1.4 | 985 | 0.70 | satisfied | absent | Example |

### [Table 2]

**Table 2**

| No. | Laser welding conditions | | | | | | | | | | | | | | | | Remarks |
|---|---|---|---|---|---|---|---|---|---|---|---|---|---|---|---|---|---|
| | Filler wire | P [kW] | V [m/min] | D [mm] | First steel sheet | | | | | | Second steel sheet | | | | | | |
| | | | | | Expression (4) | Lower limit of Expression (4) | Upper limit of Expression (4) | Expression (5) | Lower limit of Expression (5) | Upper limit of Expression (5) | Expression (4) | Lower limit of Expression (4) | Upper limit of Expression (4) | Expression (5) | Lower limit of Expression (5) | Upper limit of Expression (5) | |
| 1 | absent | 4.0 | 4.0 | 0 | satisfied | 3.3 | 14.8 | satisfied | 3.3 | 13.3 | satisfied | 3.3 | 14.8 | satisfied | 3.3 | 13.3 | Example |
| 2 | absent | 7.0 | 7.0 | 15 | satisfied | 4.3 | 22.7 | satisfied | 5.8 | 22.2 | - | - | - | - | - | - | Example |
| 3 | absent | 10.5 | 6.0 | 0 | satisfied | 4.0 | 11.7 | satisfied | 4.0 | 10.6 | satisfied | 4.0 | 12.0 | satisfied | 4.0 | 10.9 | Example |
| 4 | absent | 5.0 | 4.0 | 20 | satisfied | 3.3 | 11.2 | not satisfied | 5.3 | 12.1 | satisfied | 3.3 | 11.2 | not satisfied | 5.3 | 12.1 | Example |
| 5 | absent | 12.5 | 6.0 | 5 | satisfied | 4.0 | 12.6 | not satisfied | 4.5 | 12.0 | satisfied | 4.0 | 12.6 | not satisfied | 4.5 | 12.0 | Example |
| 6 | absent | **13.0** | 5.0 | 0 | **not satisfied** | 3.7 | 12.5 | not satisfied | 3.7 | 11.4 | satisfied | 3.7 | 13.3 | not satisfied | 3.7 | 12.1 | Comparative Example |
| 7 | absent | **3.5** | 5.0 | 0 | **not satisfied** | 3.7 | 10.6 | not satisfied | 3.7 | 9.6 | **not satisfied** | 3.7 | 10.9 | not satisfied | 3.7 | 9.9 | Comparative Example |
| 8 | absent | 7.0 | 8.0 | 10 | satisfied | 4.7 | 38.9 | satisfied | 5.7 | 36.6 | - | - | - | - | - | - | Example |
| 9 | absent | 5.0 | 3.0 | 10 | satisfied | 3.0 | 13.3 | satisfied | 4.0 | 13.0 | - | - | - | - | - | - | Example |
| 10 | absent | 7.0 | 10.0 | 10 | satisfied | 5.3 | 15.4 | satisfied | 6.3 | 15.2 | satisfied | 5.3 | 24.7 | satisfied | 6.3 | 23.7 | Example |
| 11 | present | 11.0 | 4.5 | 0 | satisfied | 3.5 | 13.1 | satisfied | 3.5 | 11.9 | - | - | - | - | - | - | Example |
| 12 | absent | 4.5 | 6.0 | 10 | satisfied | 4.0 | 15.7 | not satisfied | 5.0 | 15.3 | satisfied | 4.0 | 15.7 | not satisfied | 5.0 | 15.3 | Example |
| 13 | absent | 15.5 | 6.0 | 10 | satisfied | 4.0 | 15.7 | not satisfied | 5.0 | 15.3 | satisfied | 4.0 | 15.7 | not satisfied | 5.0 | 15.3 | Example |
| 14 | absent | 6.0 | 6.0 | 10 | satisfied | 4.0 | 15.7 | satisfied | 5.0 | 15.3 | satisfied | 4.0 | 15.7 | satisfied | 5.0 | 15.3 | Example |
| 15 | absent | 14.0 | 6.0 | 10 | satisfied | 4.0 | 15.7 | satisfied | 5.0 | 15.3 | satisfied | 4.0 | 15.7 | satisfied | 5.0 | 15.3 | Example |

### [Table 3]

**Table 3**

| No. | Vickers hardness of HAZ of first steel sheet | | | | | | | Vickers hardness of HAZ of second steel sheet | | | | | | | Evaluation results | | Remarks |
|---|---|---|---|---|---|---|---|---|---|---|---|---|---|---|---|---|---|
| | Hₛ₋ₘₐₓ [Hv] | Hₛ₋ₘᵢₙ [Hv] | Hₘ₋ₘᵢₙ [Hv] | Hₛ₋ₘₐₓ - Hₛ₋ₘᵢₙ | Expression (1) | Hₘ₋ₘᵢₙ - Hₛ₋ₘᵢₙ | Expression (3) | Hₛ₋ₘₐₓ [Hv] | Hₛ₋ₘᵢₙ [Hv] | Hₘ₋ₘᵢₙ [Hv] | Hₛ₋ₘₐₓ - Hₛ₋ₘᵢₙ | Expression (1) | Hₘ₋ₘᵢₙ - Hₛ₋ₘᵢₙ | Expression (3) | Press formability | Static tensile property | |
| 1 | 250 | 190 | 280 | 60 | satisfied | 90 | satisfied | 260 | 195 | 270 | 65 | satisfied | 75 | satisfied | A | A | Example |
| 2 | 220 | 180 | 310 | 40 | satisfied | 130 | satisfied | - | - | - | - | - | - | - | A | A | Example |
| 3 | 430 | 240 | 280 | 190 | satisfied | 40 | not satisfied | 350 | 280 | 290 | 70 | satisfied | 10 | not satisfied | A | B | Example |
| 4 | 420 | 270 | 300 | 150 | satisfied | 30 | not satisfied | 420 | 270 | 300 | 150 | satisfied | 30 | not satisfied | A | B | Example |
| 5 | 370 | 235 | 280 | 135 | satisfied | 45 | not satisfied | 370 | 235 | 280 | 135 | satisfied | 45 | not satisfied | A | B | Example |
| 6 | 410 | 200 | 330 | **210** | **not satisfied** | 130 | satisfied | 380 | 200 | 285 | 180 | satisfied | 85 | satisfied | F | F | Comparative Example |
| 7 | 500 | 270 | 275 | **230** | **not satisfied** | 5 | not satisfied | 480 | 275 | 285 | **205** | **not satisfied** | 10 | not satisfied | F | F | Comparative Example |
| 8 | 260 | 160 | 300 | 100 | satisfied | 140 | satisfied | - | - | - | - | - | - | - | A | A | Example |
| 9 | 340 | 240 | 300 | 100 | satisfied | 60 | satisfied | - | - | - | - | - | - | - | A | A | Example |
| 10 | 220 | 140 | 300 | 80 | satisfied | 160 | satisfied | 240 | 130 | 400 | 110 | satisfied | 270 | satisfied | A | A | Example |
| 11 | 260 | 170 | 320 | 90 | satisfied | 150 | satisfied | - | - | - | - | - | - | - | A | A | Example |
| 12 | 270 | 200 | 240 | 70 | satisfied | 40 | not satisfied | 300 | 240 | 280 | 60 | satisfied | 40 | not satisfied | A | B | Example |
| 13 | 450 | 280 | 290 | 170 | satisfied | 10 | not satisfied | 450 | 280 | 290 | 170 | satisfied | 10 | not satisfied | A | B | Example |
| 14 | 260 | 160 | 300 | 100 | satisfied | 140 | satisfied | 260 | 160 | 300 | 100 | satisfied | 140 | satisfied | A | A | Example |
| 15 | 410 | 220 | 290 | 190 | satisfied | 70 | satisfied | 410 | 220 | 290 | 190 | satisfied | 70 | satisfied | A | A | Example |

As illustrated in Table 3, in all of the Examples according to the present disclosure, excellent press formability of the welded portion was obtained. Furthermore, in the Examples according to the present disclosure, the static tensile property was also excellent. In contrast, in the Comparative Examples, sufficient press formability of the welded portion was not obtained.

### REFERENCE SIGNS LIST

- 1: Butt weld
- 2: First steel sheet
- 2-1: HAZ
- 2-2: Base metal portion
- 3: Second steel sheet
- 3-1: HAZ
- 3-2: Base metal portion
- 4: First bond portion
- 5: Second bond portion
- 6: HAZ-base metal portion boundary of first steel sheet
- 7: HAZ-base metal portion boundary of second steel sheet
- 8: Material to be joined
- 9: Laser light source
- 10: Laser light
- 11: Laser focal position
- 12: Crack
- 13: Outer line of stretch forming portion

## Claims

1. A laser welded joint comprising a first steel sheet, a second steel sheet, and a butt weld between the first steel sheet and the second steel sheet, wherein
either or both of the first steel sheet and the second steel sheet is a high strength steel sheet having a tensile strength of 980 MPa or more, and
Expression (1) is satisfied in a heat-affected zone of the high strength steel sheet, ${H}_{s - max} - {H}_{s - min} \leq 200$ (1)
where Hₛ₋ₘₐₓ is a maximum Vickers hardness at a surface layer on a laser incident side of the heat-affected zone of the high strength steel sheet, and
Hₛ₋ₘᵢₙ is a minimum Vickers hardness at the surface layer on the laser incident side of the heat-affected zone of the high strength steel sheet.

2. The laser welded joint according to claim 1, wherein Expression (2) is satisfied in a base metal portion of the high strength steel sheet, $0.20 \leq {H}_{bs} / {H}_{bm} \leq 0.90$ (2)
where H_{bm} is an average Vickers hardness at a thickness center position of the base metal portion of the high strength steel sheet, and
H_{bs} is an average Vickers hardness at a surface layer on the laser incident side of the base metal portion of the high strength steel sheet.

3. The laser welded joint according to claim 1 or 2, wherein Expression (3) is satisfied in the heat-affected zone of the high strength steel sheet, $50 \leq {H}_{m - min} - {H}_{s - min} \leq 300$ (3)
where Hₘ₋ₘᵢₙ is a minimum Vickers hardness at a thickness center position of the heat-affected zone of the high strength steel sheet, and
Hₛ₋ₘᵢₙ is the minimum Vickers hardness at the surface layer on the laser incident side of the heat-affected zone of the high strength steel sheet.

4. A method of producing a laser welded joint, comprising:
performing laser welding on materials to be joined, formed by butting a first steel sheet and a second steel sheet together, to obtain a laser welded joint, wherein
either or both of the first steel sheet and the second steel sheet is a high strength steel sheet having a tensile strength of 980 MPa or more, and
Expression (4) is satisfied in the laser welding, $\left(V/3\right) + 2 \leq P \leq \left[\left(V/3\right)+9\right] \times \left({H}_{bm}/{H}_{bs}\right)$ (4)
where P is a laser output in kW,
V is a welding speed in m/min,
H_{bm} is an average Vickers hardness at a thickness center position of the high strength steel sheet, and
H_{bs} is an average Vickers hardness at a surface layer on a laser incident side of the high strength steel sheet.

5. The method of producing a laser welded joint according to claim 4, wherein the high strength steel sheet satisfies Expression (2), and
Expression (5) is satisfied in the laser welding, $0.20 \leq {H}_{bs} / {H}_{bm} \leq 0.90$ (2) $\left(V/3\right) + \left(D/10\right) + 2 \leq P \leq \left[\left(V/3\right)+8\right] \times \left({H}_{bm}/{H}_{bs}\right) + \left(D/10\right)$ (5)
where P is the laser output in kW,
V is the welding speed in m/min,
D is a defocus amount, in mm, of a focal position relative to a surface of the materials to be joined during laser irradiation,
H_{bm} is the average Vickers hardness at the thickness center position of the high strength steel sheet, and
H_{bs} is the average Vickers hardness at the surface layer on the laser incident side of the high strength steel sheet.
